# FASCICULE DE BREVET EUROPEEN

(11) **EP 1 170 598 B1**
(45) Date de publication et mention de la délivrance du brevet: **26.09.2007**
(21) Numéro de dépôt: 00202337.2
(22) Date de dépôt: 04.07.2000
(51) Int. Cl.: G01S 1/04, G06F 1/32

(54) **Procédé de commande d'un dispositif de navigation et dispositif de navigation mettant en oeuvre ce procédé**
Verfahren zur Steurung eines Navigationsgerät und Navigationsgerät dafür
Method of controlling a navigation device and navigation device using this method

(43) Date de publication de la demande: 09.01.2002
(73) Titulaire: ASULAB S.A., CH-2501 Bienne (CH)
(72) Inventeur: Farine, Pierre-André, 2000 Neuchâtel (CH); Piccini, Fanel, 2202 Chambrelien (CH); Nguyen, Thien Kim, 1422 Les Tuileries-de-Grandson (CH)
(74) Mandataire: Laurent, Jean

(56) Documents cités:
- WO-A-97/14049
- WO-A-99/19742
- US-A- 6 032 108
- PATENT ABSTRACTS OF JAPAN vol. 1998, no. 13, 30 novembre 1998 (1998-11-30) & JP 10 206520 A (CANON INC), 7 août 1998 (1998-08-07)

## Description

La présente invention concerne généralement un procédé de commande d'un dispositif de navigation alimenté par batterie ou par accumulateur rechargeable, tel un dispositif de navigation par satellite comme un récepteur GPS, GLONASS ou GALILEO (futur système européen de navigation), ainsi qu'un dispositif de navigation mettant en oeuvre ce procédé. Le dispositif de navigation selon la présente invention est en particulier destiné à être incorporé dans une pièce d'horlogerie. A ce titre, la présente invention concerne également une pièce d'horlogerie comprenant un dispositif de navigation du type susmentionné.

L'utilisation de dispositifs de navigation, et en particulier de récepteurs GPS, était jusqu'à récemment essentiellement réservée à un nombre d'applications restreint. Récemment, cette utilisation s'est banalisée et généralisée, et de plus en plus d'applications commerciales font appel à de tels dispositifs. Dans le cadre de cette généralisation, on voit maintenant des dispositifs de navigation être intégrés dans des objets portatifs de faible volume alimentés par batterie ou par accumulateur rechargeable. Ainsi, des objets portatifs intégrant une fonction de navigation, telles des pièces d'horlogerie se présentant sous la forme de montres-bracelets, sont commercialisés depuis peu.

Un problème fondamental de tels objets portatifs alimentés par batterie réside dans leur autonomie de marche très réduite. En effet, un dispositif de navigation constitue typiquement un module de grande consommation qui, s'il est activé en permanence, épuise rapidement les capacités de la batterie ou de l'accumulateur alimentant l'objet portatif.

Diverses solutions ont été envisagées dans l'optique d'économiser l'énergie de tels dispositifs. L'une de ces solutions consiste en particulier à n'activer que périodiquement le dispositif de navigation et ceci pour une durée réduite afin d'effectuer les opérations de mesure de position et de temps nécessaires. Une solution particulièrement intéressante adoptant cette technique est décrite dans la demande de brevet japonais JP 10-206520 au nom de Canon Inc., déposée le 16 janvier 1997. Cette solution consiste à désactiver périodiquement un dispositif de navigation, et ceci pour une durée variable dépendant de la vitesse de déplacement du dispositif. A cet effet, ce dispositif de navigation comprend des moyens de calcul agencés pour déterminer la vitesse de déplacement du récepteur sur la base de mesures de position et de temps, et des moyens de contrôle pour varier le temps de désactivation du récepteur entre deux opérations successives de mesures de position.

Un désavantage du dispositif décrit dans le document japonais susmentionné réside toutefois dans le fait que la consommation du dispositif est soit maximale lorsque le dispositif est activé, soit minimale lorsque le dispositif est désactivé. Un effet pervers de cette technique réside dans le fait que la batterie ou l'accumulateur utilisé pour alimenter l'objet portatif dans lequel est incorporé le dispositif de navigation est soumis à de fortes variations périodiques de consommation. Des tests effectués par le déposant ont pu mettre en évidence que cette charge périodique dégradait rapidement et sensiblement la durée de vie de l'accumulateur ou de la batterie utilisée, réduisant ainsi l'autonomie de marche de l'objet portatif.

Le déposant a ainsi pu constater que le dispositif de navigation décrit dans le document japonais susmentionné ne s'avérait pas être en pratique intégrable dans des objets portatifs de faible volume, telles des pièces d'horlogerie, dans lesquelles l'accumulateur ou la batterie utilisée comme source d'alimentation en énergie électrique constitue un élément critique qui, s'il est soumis aux contraintes décrites plus haut, n'aurait pas une autonomie de marche suffisante.

La présente invention a donc pour but de pallier aux inconvénients rencontrés avec les dispositifs de navigation de l'art antérieur lorsque ceux-ci sont périodiquement activés et désactivés comme le montre par exemple le document japonais susmentionné.

La présente invention a en particulier pour but de proposer un procédé de commande d'un dispositif de navigation ainsi qu'un dispositif de navigation mettant en oeuvre ce procédé de manière à ce que la consommation de ce dernier soit ajustée de manière optimale selon le taux d'activité nécessaire.

La présente invention a encore pour but de proposer un dispositif de navigation qui s'avère parfaitement intégrable dans un objet portatif, telle une pièce d'horlogerie, alimenté par batterie ou accumulateur rechargeable.

La présente invention a donc pour premier objet un procédé de commande d'un dispositif de navigation dont les caractéristiques sont énoncées à la revendication indépendante 1.

La présente invention a également pour autre objet un dispositif de navigation dont les caractéristiques sont énoncées dans la revendication indépendante 5.

La présente invention a encore pour autre objet une pièce d'horlogerie incorporant un dispositif de navigation du type susmentionné.

Des modes de réalisations avantageux de la présente invention font l'objet des revendications dépendantes.

Un avantage de la présente invention réside dans le fait que, contrairement aux dispositifs de navigation de l'art antérieur, la consommation du dispositif de navigation est graduellement ajustée en fonction du taux d'activité nécessaire. En effet, le dispositif de navigation selon la présente invention n'est plus périodiquement activé ou désactivé conformément à ce qui est typiquement mis en oeuvre dans les dispositifs de navigation connus, mais son fonctionnement ou plus exactement la fréquence de fonctionnement de l'unité de traitement du dispositif de navigation est ajustée et adaptée en fonction des conditions d'utilisation. Il en résulte des contraintes nettement moins importantes pour la batterie ou l'accumulateur rechargeable utilisé pour alimenter le dispositif.

Le dispositif de navigation selon la présente invention peut ainsi avantageusement être incorporé dans un objet portatif de faible volume et de faible capacité, telle une pièce d'horlogerie par exemple.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1a montre un diagramme illustrant de manière schématique la consommation en courant en fonction du temps d'un dispositif de navigation mettant en oeuvre une solution connue de l'art antérieur, cette solution consistant à activer et désactiver périodiquement tout ou partie du dispositif de navigation;
- la figure 1b montre un autre diagramme illustrant de manière schématique la consommation en courant d'un dispositif de navigation mettant en oeuvre le procédé de commande selon la présente invention;
- la figure 2 montre un schéma bloc d'un dispositif de navigation permettant de mettre en oeuvre le procédé de commande selon la présente invention;
- la figure 3a montre un exemple d'un organigramme de mise en oeuvre du procédé de commande selon la présente invention; et
- la figure 3b illustre l'évolution, en fonction de la vitesse de déplacement du dispositif de navigation, de la fréquence de fonctionnement de l'unité de traitement du dispositif de navigation selon la présente invention.

La présente invention a en particulier été développée dans l'optique d'intégrer un dispositif de navigation, tel un récepteur GPS, dans une pièce d'horlogerie telle une montre bracelet. On comprendra bien évidemment que la présente invention ne saurait être limitée à cette seule application et peut parfaitement être appliquée à toute autre application dans laquelle on désire intégrer des fonctions de navigation dans un dispositif portatif alimenté par batterie ou par accumulateur rechargeable.

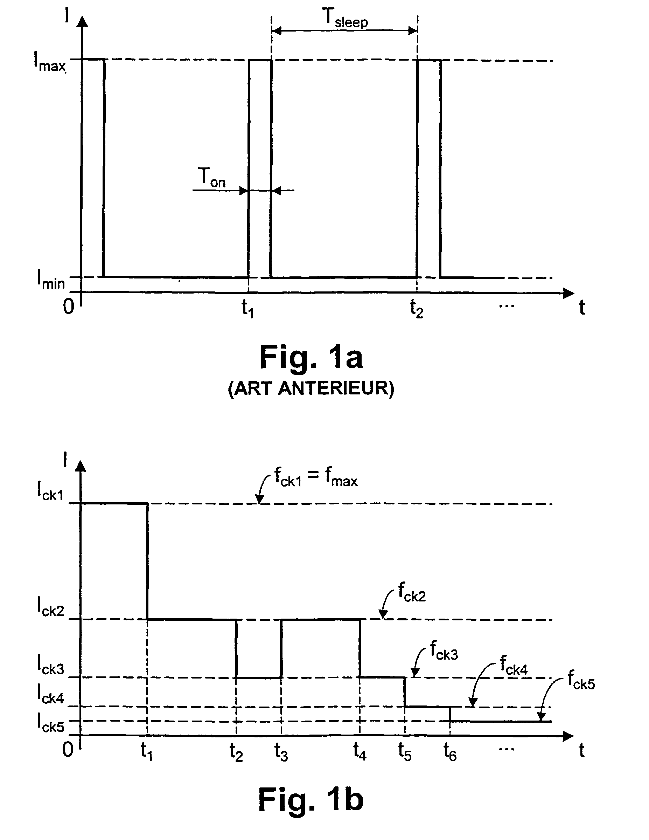

La figure 1a montre un diagramme illustrant de manière schématique la consommation en courant en fonction du temps d'un dispositif de navigation mettant en oeuvre une solution connue de l'art antérieur, cette solution consistant à activer et désactiver périodiquement tout ou partie du dispositif de navigation. Cette solution est par exemple utilisée dans le cadre du document japonais mentionné en préambule.

Cette solution connue consiste, comme cela a déjà été mentionné, à périodiquement activer et désactiver le dispositif de navigation. Ainsi, à des instants déterminé 0, t₁, t₂, ..., le dispositif de navigation est activé pour une durée généralement déterminée Tₒₙ afin de permettre les opérations désirées de mesure de position, de vitesse de déplacement et de temps, ou "mesures PVT". Le dispositif de navigation est ensuite désactivé pour une durée déterminée Tₛₗₑₑₚ qui peut être soit constante, soit variable comme le montre le document japonais décrit en préambule. Dans cet état, il est important de mentionner que les impulsions d'horloge sont typiquement bloquées en amont de l'unité de traitement dont est typiquement pourvu le dispositif de navigation, de sorte que la fréquence de fonctionnement de cette unité de traitement est nulle. Seuls les éléments nécessaires à la réactivation du dispositif de navigation (horloge, compteur, etc.) sont encore en fonction.

Selon cette solution connue, la consommation en courant, représentée sur l'abscisse dans le diagramme de la figure 1a, est soit maximale à une valeur de courant Iₘₐₓ lorsque le dispositif de navigation est activé, c'est-à-dire lorsque l'unité de traitement du dispositif est normalement cadencée à sa fréquence de fonctionnement par l'horloge du système, soit minimale à une valeur de courant Iₘᵢₙ lorsque le dispositif de navigation est désactivé. Cette valeur de courant minimal Iₘᵢₙ résulte en particulier de la consommation résiduelle causée par les éléments nécessaires à la réactivation du dispositif de navigation et/ou d'autres éléments toujours enclenchés dans certaines solutions.

Les pics de consommation engendrés lors du passage d'un état d'activation à un état d'inactivation du dispositif, et inversement, causent, comme cela a déjà été mentionné, une dégradation sensible de la durée de vie de la batterie ou de l'accumulateur rechargeable utilisé pour alimenter le dispositif de navigation.

Selon la présente invention, et à la différence de la technique de commande connue illustrée à la figure 1a, la consommation du dispositif de navigation est graduellement ajustée en fonction du taux d'activité nécessaire.

La figure 1b montre un diagramme similaire au diagramme de la figure 1a, illustrant schématiquement la consommation en courant d'un dispositif de navigation mettant en oeuvre le procédé de commande selon la présente invention. Selon la présente invention, le dispositif de navigation n'est ainsi plus périodiquement activé ou désactivé mais la fréquence de fonctionnement de l'unité de traitement est ajustée à une pluralité de fréquences dite de fonctionnement réduit f_{ck2}, f_{ck3}, f_{ck4}, f_{ck5} inférieures à la fréquence dite de fonctionnement normal f_{ck1} (ou fₘₐₓ) de l'unité de traitement, en fonction de la valeur d'une mesure de vitesse de déplacement du dispositif de navigation.

En particulier, à la différence de la demande de brevet JP 10-206520 susmentionnée, le dispositif de navigation ou plus exactement l'unité de traitement du dispositif de navigation n'est plus désactivée pour une durée variable en fonction de la vitesse de déplacement mesurée, mais le fonctionnement du dispositif, par le biais d'un ajustement de la fréquence de fonctionnement de l'unité de traitement, est graduellement ajusté en fonction de la vitesse de déplacement mesurée.

Comme le montre schématiquement la figure 1b, à chaque niveau de fréquence de fonctionnement f_{ck1} à f_{ck5} de l'unité de traitement correspond un niveau de consommation en courant, repéré l_{ck1} à l_{ck5}, ces niveaux de consommation en courant allant bien évidemment en diminuant au fur et à mesure que la fréquence de fonctionnement est diminuée et dans un rapport sensiblement similaire au rapport des fréquences de fonctionnement f_{ck1} à f_{ck5}.

Contrairement au procédé de commande typiquement mis en oeuvre, les pics de consommation engendrés lors de la mise en oeuvre du procédé selon la présente invention sont sensiblement moins importants et donc sensiblement moins néfastes pour la batterie ou l'accumulateur rechargeable utilisé.

En effet, le dispositif de navigation selon la présente invention n'est plus périodiquement activé ou désactivé conformément à ce qui est typiquement mis en oeuvre dans les dispositifs de navigation connus, mais son fonctionnement ou plus exactement la fréquence de fonctionnement de l'unité de traitement du dispositif de navigation est ajustée et adaptée en fonction des conditions d'utilisation. Il en résulte des contraintes nettement moins importantes pour la batterie ou l'accumulateur rechargeable utilisé pour alimenter le dispositif.

Selon la présente invention, il sera préférable d'associer chaque fréquence de fonctionnement f_{ck1}, f_{ck2}, f_{ck3}, f_{ck4}, f_{ck5} à une plage de valeurs de vitesses de déplacement déterminée, la fréquence de fonctionnement de l'unité de traitement du dispositif de navigation étant ajustée à la fréquence adéquate en déterminant dans laquelle desdites plages de valeurs de vitesses se situe la valeur de mesure de vitesse de déplacement du dispositif de navigation. Comme on le verra plus en détail ultérieurement, l'ajustement de la fréquence de fonctionnement peut être effectué en agissant sur un facteur de division de la fréquence de fonctionnement normal f_{ck1} (ou fₘₐₓ) afin de dériver les fréquences de fonctionnement réduit f_{ck2} à f_{ck5}.

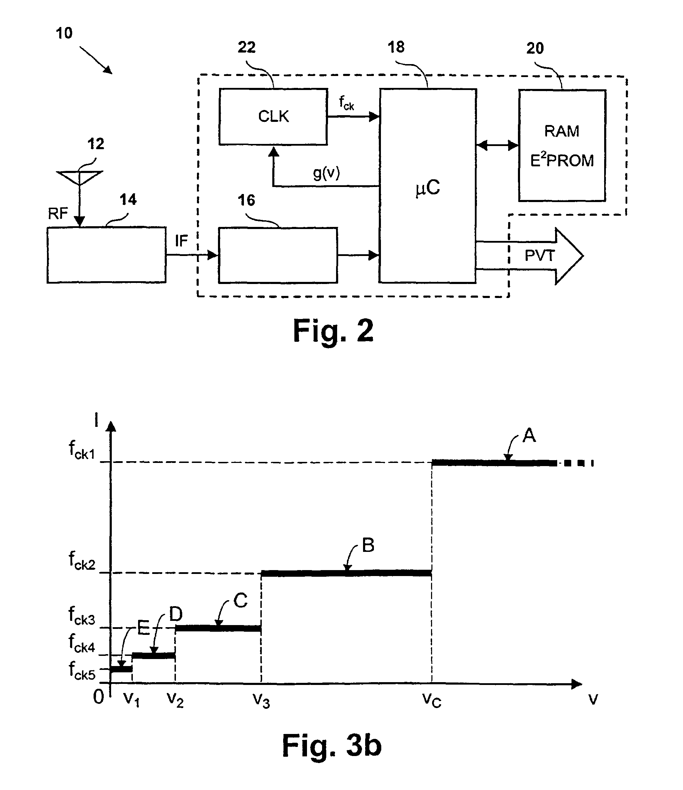

La figure 2 montre de manière générale un schéma bloc d'un dispositif de navigation selon la présente invention, repéré globalement par la référence numérique 10, permettant de mettre en oeuvre le procédé de commande selon la présente invention. Ce dispositif de navigation 10, tel par exemple un récepteur GPS, GLONASS, GALILEO ou autre, est alimenté par une batterie ou un accumulateur rechargeable (non représenté) et comprend typiquement des moyens de réception de signaux de navigation comprenant une antenne 12 capable de détecter des signaux de navigation GPS (ou autres) et un bloc de réception et de mise en forme 14 des signaux de navigation captés par l'antenne 12. Le bloc de réception et de mise en forme 14 des signaux de navigation pré-amplifie et ramène ici, de manière classique, la fréquence radio RF des signaux de navigation GPS (de l'ordre de 1,57542 GHz pour les applications civiles) à une fréquence intermédiaire IF permettant leur traitement. Ces signaux sont en outre typiquement échantillonnés par un convertisseur A/D en sortie du bloc de réception et de mise en forme 14 afin de produire des données numériques susceptibles d'être traitées par l'étage suivant.

Le dispositif de navigation 10 comprend en outre, connectés sur la sortie du bloc de réception et de mise en forme 14, des moyens de traitement des signaux de navigation permettant d'extraire et de produire une mesure de position, de vitesse de déplacement et du temps ou mesures PVT du dispositif de navigation. Ces moyens de traitement comprennent typiquement un premier bloc de corrélation et de démodulation 16 réalisant ici les opérations de corrélation des signaux de navigation GPS avec ceux générés par le récepteur, ainsi qu'une unité de traitement 18 permettant de récolter et traiter les données issues du bloc de corrélation et de démodulation 16 afin d'en extraire notamment les mesures PVT.

Plus spécifiquement, le bloc de corrélation et de démodulation 16 assure, d'une part, "l'acquisition d'un satellite", c'est-à-dire la synchronisation sur la porteuse du signal du satellite et la corrélation du code pseudo-aléatoire émis par ce satellite et du code pseudo-aléatoire généré localement, ainsi que, d'autre part, "la poursuite du satellite", durant laquelle le signal de navigation émis par le satellite est démodulé afin d'en extraire les données nécessaires à la détermination de la position, de la vitesse de déplacement et du temps.

Les moyens de traitement comprennent en outre, associés avec l'unité de traitement 18, des moyens de mémorisation 20 (RAM, EEPROM, ...) permettant notamment de stocker les mesures de position, de vitesse de déplacement et de temps ainsi que des données d'almanach et les codes pseudo-aléatoires des satellites. L'unité de traitement 18 est en outre typiquement cadencée par une horloge ou moyens d'horloge 22 à une fréquence de fonctionnement f_{ck}. En temps normal, cette fréquence de fonctionnement f_{ck} est équivalente à la fréquence de fonctionnement normal f_{ck1}.

Selon la présente invention, les moyens d'horloge 22 sont agencés pour ajuster la fréquence de fonctionnement de l'unité de traitement 18 à une pluralité de fréquences dite de fonctionnement réduit, dans cet exemple au nombre de quatre, f_{ck2}, f_{ck3}, f_{ck4}, f_{ck5}, inférieures à la fréquence de fonctionnement normal f_{ck1}, de l'unité de traitement et ceci en fonction de la valeur de la mesure de vitesse de déplacement v déterminée par les moyens de traitement. Dans l'exemple, les moyens d'horloge 22 sont ainsi commandés par l'unité de traitement 18 par une fonction d'ajustement symbolisée g(v). Comme on le verra ultérieurement, cette fonction g(v) peut par exemple consister à ajuster le facteur de division des moyens d'horloges 22.

A titre d'exemple, les moyens d'horloge 22 peuvent comprendre, de manière non limitative, une chaîne de division dont le taux de division est contrôlable. Par l'utilisation de quatre étages de division binaire et de moyens d'adressage adéquat, il est par exemple aisément possible de diviser la fréquence du signal émanant des moyens d'horloge 22 par des facteurs 2, 4, 8 ou 16.

On notera que l'unité de traitement 18, les moyens de mémorisation 20, ainsi que les moyens d'horloge 22 peuvent être intégrés sous la forme d'un unique micro-contrôleur. A ce titre, dans le cadre d'un exemple de réalisation particulier de l'invention, on peut faire appel à un tel micro-contrôleur commercialisé sous la référence "CooIRISC^{™} 816 8-bit Microcontroller Core". Ce micro-contrôleur, développé par le CSEM, IC Design, avec la collaboration de EM Microelectronic-Marin SA, remplit les fonctions énoncées ci-dessus. En particulier, ce micro-contrôleur dispose d'une horloge interne cadencée à 8,8 MHz et d'une instruction générique de division de fréquence par 1, 2, 4, 8 ou 16 qui peut être exécutée, selon l'enseignement de la présente invention afin d'effectuer l'ajustement de la fréquence de fonctionnement du micro-contrôleur en fonction de la vitesse de déplacement mesurée. Des informations complémentaires et détaillées concernant le micro-contrôleur "CooIRISC^{™}" peuvent aisément être trouvées dans la littérature technique accessible par l'homme du métier.

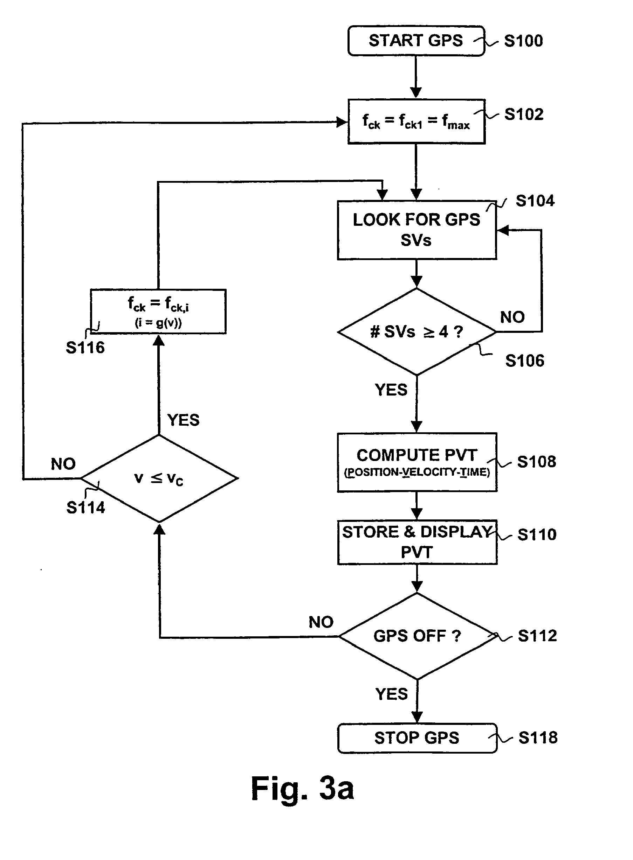

On décrira maintenant au moyen des figures 3a et 3b, un mode de mise en oeuvre du procédé de commande selon la présente invention qui peut aisément être programmé et implémenté par l'homme du métier au moyen du micro-contrôleur susmentionné.

La figure 3a présente ainsi un organigramme d'un exemple non limitatif de mise en oeuvre du procédé de commande selon la présente invention. Lors d'une première étape S100, le dispositif de navigation ou récepteur GPS est activé. Cette étape peut par exemple correspondre à la mise en service de la fonction de navigation dans une pièce d'horlogerie incorporant un récepteur GPS selon la présente invention, cette mise en service étant par exemple activée par la pression d'un utilisateur sur un organe de commande de la pièce d'horlogerie.

Suite à l'activation du récepteur GPS, la fréquence de fonctionnement f_{ck} de l'unité de traitement (par "unité de traitement" on entend également "micro-contrôleur") est ajustée à l'étape S102 à la fréquence de fonctionnement normal f_{ck1} (cette fréquence f_{ck1} pouvant également être définie comme la fréquence maximale de fonctionnement normal fₘₐₓ).

L'étape suivante consiste à rechercher des satellites ou SVs (Satellite Vehicles). Cette opération est effectuée à l'étape S104. Géométriquement, trois satellites sont nécessaires pour obtenir une information de position adéquate. En pratique, toutefois, afin d'éliminer l'imperfection de synchronisation entre l'horloge locale du récepteur et les horloges des satellites, au moins quatre satellites sont nécessaires pour obtenir des données de position et de temps suffisamment précises. Cette recherche d'au moins quatre satellites est symbolisée par le test effectué à l'étape S106.

Si le nombre de satellites est suffisant, on procède alors à la détermination, à l'étape S108, de la position du récepteur, de sa vitesse de déplacement et du temps (mesures PVT). Ces mesures PVT sont typiquement mémorisées et, le cas échéant, affichées comme cela est indiqué par l'étape S110.

A l'étape S112, il peut être désirable de désactiver le récepteur GPS, par exemple suite à une action de l'utilisateur sur un organe de commande de la pièce d'horlogerie. Dans l'affirmative, le récepteur GPS est désactivé à l'étape S118.

Dans la négative toutefois, on procède, à l'étape S114 selon cet exemple, à une comparaison entre la valeur de vitesse de déplacement mesurée v et une valeur limite déterminée v_{C}. Cette valeur v_{C} peut être fixée arbitrairement, par exemple et de manière non limitative, à une vitesse de 10 km/h. Si la vitesse de déplacement mesurée est supérieure à cette limite, la fréquence de fonctionnement f_{ck} de l'unité de traitement est maintenue à l'étape S102 à la fréquence de fonctionnement normal f_{ck1}.

Si par contre la vitesse de déplacement mesurée est inférieure à la limite fixée v_{C}, il convient selon la présente invention d'ajuster, à l'étape S116, la fréquence de fonctionnement f_{ck} de l'unité de traitement afin de l'adapter aux conditions d'utilisation. Comme mentionné plus haut, la fréquence de fonctionnement est déterminée selon une fonction g(v) de la vitesse de déplacement mesurée.

Une fois la fréquence de fonctionnement ajustée, le processus de recherche des satellites et de détermination des mesures de position, de vitesse de déplacement et de temps peut être répété.

En se référant à la figure 3b, on a schématisé un exemple non limitatif de la fonction d'ajustement g(v). Cette fonction peut être symbolisée comme l'association d'une fréquence de fonctionnement f_{ck1} à f_{ck5} et d'une plage de valeurs de vitesses de déplacement déterminée A, B, C, D, E. Cette fonction peut par exemple être implémentée sous la forme d'une table de correspondance comprenant d'une part les plages de valeurs de vitesses de déplacement déterminée A à E, ou tout du moins des informations permettant de déterminer ces plages (valeurs limites v₁, v₂, v₃, v_{C}), ainsi que la fréquence de fonctionnement correspondante. A titre d'exemple, on mémorisera le facteur de division nécessaire pour que les moyens d'horloge 22 génèrent la fréquence adéquate, soit par exemple 1, 2, 4, 8 ou 16, ceci pouvant aisément être réalisé au moyen de l'instruction générique du micro-contrôleur CooIRISC^{™} susmentionné.

Dans le principe, l'ajustement de la fréquence de fonctionnement de l'unité de traitement peut être opéré soit en ajustant directement la fréquence de fonctionnement à la valeur désirée, soit en ajustant graduellement et séquentiellement la fréquence de fonctionnement à la valeur désirée, c'est-à-dire en ajustant la fréquence de fonctionnement de l'unité de traitement à une autre fréquence de fonctionnement en passant par toutes les fréquences de fonctionnement intermédiaires. Un ajustement graduel et séquentiel de la fréquence de fonctionnement est par exemple illustré dans la figure 1b.

On comprendra que l'un ou l'autre des modes d'ajustement (direct ou séquentiel) peut être envisagé selon les conditions d'utilisation. On comprendra qu'un ajustement séquentiel de la fréquence de fonctionnement de l'unité de traitement offre l'avantage de réduire les chutes ou sauts de consommation qui sont néfastes pour la batterie ou l'accumulateur rechargeable. Un ajustement direct de la fréquence pourrait être envisageable afin de rapidement remettre le dispositif de fonctionnement dans un état de fonctionnement maximal.

A titre de variante avantageuse du dispositif de navigation selon la présente invention, il peut être envisageable d'équiper ce dernier de moyens permettant de réajuster automatiquement la fréquence de fonctionnement de l'unité de traitement à la fréquence de fonctionnement normal f_{ck1}, tel par exemple un capteur de mouvement ou d'accélération fournissant une information à l'unité de traitement concernant un changement soudain de l'attitude de l'utilisateur.

On comprendra que diverses modifications peuvent être apportées au procédé et au dispositif décrits dans la présente description sans sortir du cadre de l'invention. En particulier, le nombre ainsi que la répartition des diverses fréquences de fonctionnement n'est nullement limité au nombre (5) ainsi qu'à la répartition (division par 1, 2, 4, 8 ou 16) suggérés dans la présente description en rapport au micro-contrôleur utilisé. On rappellera de plus que le micro-contrôleur utilisé à titre d'exemple pour remplir les fonctions désirées peut être remplacé par tout autre moyen équivalent remplissant des fonctions similaires.

## Revendications

1. Procédé de commande d'un dispositif de navigation (10), tel un récepteur GPS, GLONASS, GALILEO ou autre, alimenté par batterie ou accumulateur rechargeable, comprenant :
- des moyens de réception (12, 14) de signaux de navigation;
- des moyens de traitement (16, 18) desdits signaux de navigation agencés pour produire une mesure de position, de vitesse de déplacement (v) et de temps, ou mesures PVT, lesdits moyens de traitement comprenant une unité de traitement (18) agencée pour fonctionner à une première fréquence dite de fonctionnement normal (f_{ck1}); et
- des moyens d'horloge (22) pour produire ladite fréquence de fonctionnement normal (f_{ck1});
ce procédé de commande étant **caractérisé en ce qu'**il comprend les étapes suivante :
- mesure de la vitesse de déplacement (v) dudit dispositif de navigation (10); et
- ajustement de la fréquence de fonctionnement (f_{ck}) de ladite unité de traitement (18) par lesdits moyens d'horloge a une pluralité de fréquences dite de fonctionnement réduit (f_{ck2}, f_{ck3}, f_{ck4}, f_{ck5}), inférieures à ladite fréquence de fonctionnement normal (f_{ck1}), en fonction de la valeur de ladite mesure de vitesse de déplacement (v).

2. Procédé de commande selon la revendication 1, **caractérisé en ce que** l'ajustement de la fréquence de fonctionnement (f_{ck}) de ladite unité de traitement est opéré par ajustement d'un facteur de division desdits moyens d'horloge (22).

3. Procédé de commande selon la revendication 1 ou 2, **caractérisé en ce que** la fréquence de fonctionnement (f_{ck}) de ladite unité de traitement (18) est ajustée à ladite fréquence de fonctionnement normal (f_{ck1}) tant que la valeur de ladite mesure de vitesse de déplacement (v) est supérieure à une valeur limite déterminée (v_{C}).

4. Procédé de commande selon l'une quelconque des revendications 1 à 3, **caractérisé en ce que** chaque fréquence de fonctionnement (f_{ck1}, f_{ck2}, f_{ck3}, f_{ck4}, f_{ck5}) est associée à une plage de valeurs de vitesses de déplacement déterminée (A, B, C, D, E).

5. Procédé de commande selon la revendication 4, **caractérisé en ce que** la fréquence de fonctionnement (f_{ck}) de ladite unité de traitement (18) est ajustée directement ou de manière graduelle et séquentielle à l'une desdites fréquences de fonctionnement (f_{ck1}, f_{ck2}, f_{ck3}, f_{ck4}, f_{ck5}) selon que la valeur de ladite mesure de vitesse de déplacement (v) se situe dans l'une ou l'autre desdites plages de valeurs de vitesse de déplacement déterminées (A, B, C, D, E).

6. Dispositif de navigation, tel un récepteur GPS, GLONASS, GALILEO ou autre, alimenté par batterie ou par accumulateur rechargeable, comprenant :
- des moyens de réception (12, 14) de signaux de navigation;
- des moyens de traitement (16, 18) desdits signaux de navigation agencés pour produire une mesure de position, de vitesse de déplacement (v) et de temps, ou mesures PVT, lesdits moyens de traitement comprenant une unité de traitement (18) agencée pour fonctionner à une première fréquence dite de fonctionnement normal (f_{ck1}); et
- des moyens d'horloge (22) pour produire ladite fréquence de fonctionnement normal (f_{ck1});
**caractérisé en ce que** lesdits moyens d'horloge (22) sont agencés pour ajuster la fréquence de fonctionnement de ladite unité de traitement (18) à une pluralité de fréquences dite de fonctionnement réduit (f_{ck2}, f_{ck3}, f_{ck4}, f_{ck5}), inférieures à ladite fréquence de fonctionnement normal (f_{ck1}), en fonction de la valeur de ladite mesure de vitesse de déplacement (v).

7. Dispositif de navigation selon la revendication 6, **caractérisé en ce qu'**un facteur de division desdits moyens d'horloge (22) est ajusté en fonction de la valeur de ladite mesure de vitesse de déplacement (v).

8. Dispositif de navigation selon la revendication 6 ou 7, **caractérisé en ce que** celui-ci comprend en outre des moyens permettant de réajuster automatiquement la fréquence de fonctionnement (f_{ck}) de ladite unité de traitement (18) à ladite fréquence de fonctionnement normal (f_{ck1}).

9. Dispositif de navigation selon la revendication 8, **caractérisé en ce que** lesdits moyens permettant de réajuster automatiquement la fréquence de fonctionnement (f_{ck}) de ladite unité de traitement (18) comprennent un capteur de mouvement ou d'accélération.

10. Pièce d'horlogerie comprenant un dispositif de navigation selon l'une quelconque des revendications 6 à 9.

## Claims

1. Method for controlling a navigation device (10), such as a GPS, GLONASS, GALILEO or other receiver, powered by a battery or a rechargeable accumulator, comprising :
- receiving means (12, 14) for receiving navigation signals ;
- processing means (16, 18) for processing said navigation signals and for generating a position, velocity (v) and time measurement, or PVT measurements, said processing means including a processing unit (18) arranged to operate at a first so-called normal operating frequency (f_{ck1}) ; and
- clock means (22) for generating said normal operating frequency (f_{ck1}), this control method being **characterized in that** it includes the following steps:
- measuring the velocity (v) of said navigation device (10); and
- adjusting the operating frequency (f_{ck}) of said processing unit (18) by said clock means to a plurality of so-called reduced operating frequencies (f_{ck2}, f_{ck3}, f_{ck4}, f_{ck5}) lower than said normal operating frequency (f_{ck1}) as a function of the value of said velocity measurement (v).

2. Control method according to claim 1, **characterized in that** the adjustment of the operating frequency (f_{ck}) of said processing unit is achieved by adjusting a division factor of said clock means (22).

3. Control method according to claim 1 or 2, **characterized in that** the operating frequency (f_{ck}) of said processing unit (18) is adjusted to said normal operating frequency (f_{ck1}) while the value of said velocity measurement (v) is higher than a determined limit value (v_{c}).

4. Control method according to any one of claims 1 to 3, **characterized in that** each operating frequency (f_{ck1}, f_{ck2,} f_{ck3}, f_{ck4}, f_{ck5}) is associated with a determined range of velocity values (A, B, C, D).

5. Control method according to claim 4, **characterized in that** the operating frequency (f_{ck}) of said processing unit (18) is adjusted directly or gradually and sequentially to one of said operating frequencies (f_{ck1,} f_{ck2,} f_{ck3}, f_{ck4}, f_{ck5}) according to whether the value of said velocity measurement (v) is situated in one or the other of said determined ranges of velocity values (A, B, C, D).

6. Navigation device, such as a GPS, GLONASS, GALILEO or other receiver, powered by a battery or a rechargeable accumulator, comprising :
- receiving means (12, 14) for receiving navigation signals ;
- processing means (16, 18) for processing said navigation signals and for generating a position, velocity (v) and time measurement, or PVT measurements, said processing means including a processing unit (18) arranged to operate at a first so-called normal operating frequency (f_{ck1}) ; and
- clock means (22) for generating said normal operating frequency (f_{ck1});
**characterized in that** said navigation device further comprises means for adjusting the operating frequency of said processing unit (18) generated by said clock means (22) to a plurality of so-called reduced operating frequencies (f_{ck2}, f_{ck3}, f_{ck4,} f_{ck5}) lower than said normal operating frequency (f_{ck1}) as a function of the value of said velocity measurement (v).

7. Navigation device according to claim 6, **characterized in that** it further comprises means for adjusting a division factor of said clock means (22) as a function of the value of said velocity measurement (v).

8. Navigation device according to claim 6 or 7, **characterized in that** it further comprises attitude detecting means for automatically re-adjusting the operating frequency (f_{ck}) of said processing unit (18) to said normal operating frequency (f_{ck1}).

9. Navigation device according to claim 8, **characterized in that** said attitude detecting means for automatically re-adjusting the operating frequency (f_{ck}) of said processing unit (18) includes a movement or acceleration sensor.

10. Timepiece including a navigation device according to any one of claims 6 to 9.

## Patentansprüche

1. Verfahren zum Steuern einer Navigationsvorrichtung (10) wie etwa eines GPS-, GLONASS- oder GALILEO-Empfängers oder dergleichen, der durch eine Batterie oder einen wiederaufladbaren Akkumulator gespeist wird, das umfasst:
- Mittel (12, 14) zum Empfangen von Navigationssignalen;
- Mittel (16, 18) zum Verarbeiten der Navigationssignale, die so beschaffen sind, dass sie eine Messung der Position, der Verlagerungsgeschwindigkeit (v) und der Zeit oder PVT-Messungen erzeugen, wobei die Verarbeitungsmittel eine Verarbeitungseinheit (18) umfassen, die so beschaffen ist, dass sie mit einer ersten so genannten normalen Betriebsfrequenz (f_{ck1}) arbeitet; und
- Taktmittel (22) zum Erzeugen der normalen Betriebsfrequenz (f_{ck1});
wobei das Steuerverfahren **dadurch gekennzeichnet ist, dass** es die folgenden Schritte umfasst:
- Messen der Verlagerungsgeschwindigkeit (v) der Navigationsvorrichtung (10); und
- Einstellen der Betriebsfrequenz (f_{ck}) der Verarbeitungseinheit (18) durch die Taktmittel auf mehrere so genannte reduzierte Betriebsfrequenzen (f_{ck2}, f_{ck3}, f_{ck4}, f_{ck5}), die niedriger als die normale Betriebsfrequenz (f_{ck1}) sind, in Abhängigkeit vom Wert der Messung der Verlagerungsgeschwindigkeit (v).

2. Steuerverfahren nach Anspruch 1, **dadurch gekennzeichnet, dass** die Einstellung der Betriebsfrequenz (f_{ck}) der Verarbeitungseinheit durch Einstellen eines Teilungsfaktors der Taktmittel (22) vorgenommen wird.

3. Steuerverfahren nach Anspruch 1 oder 2, **dadurch gekennzeichnet, dass** die Betriebsfrequenz (f_{ck}) der Verarbeitungseinheit (18) auf die normale Betriebsfrequenz (f_{ck1}) eingestellt wird, solange der Wert der Messung der Verlagerungsgeschwindigkeit (v) höher als ein gegebener Grenzwert (v_{C}) ist.

4. Steuerverfahren nach einem der Ansprüche 1 bis 3, **dadurch gekennzeichnet, dass** jeder Betriebsfrequenz (f_{ck1}, f_{ck2}, f_{ck3}, f_{ck4}, f_{ck5}) ein gegebener Wertebereich (A, B, C, D, E) für die Verlagerungsgeschwindigkeit zugeordnet ist.

5. Steuerverfahren nach Anspruch 4, **dadurch gekennzeichnet, dass** die Betriebsfrequenz (f_{ck}) der Verarbeitungseinheit (18) direkt oder stufenweise und sequentiell auf eine der Betriebsfrequenzen (f_{ck1'} f_{ck2}, f_{ck3}, f_{ck4}, f_{ck5}) entsprechend dem Wert der Messung der Verlagerungsgeschwindigkeit (v), der in dem einen oder dem anderen der gegebenen Wertebereiche (A, B, C, D, E) für die Verlagerungsgeschwindigkeit liegt, eingestellt wird.

6. Navigationsvorrichtung wie etwa ein GPS-, GLONASS- oder GALILEO-Empfänger oder dergleichen, der durch eine Batterie oder einen wiederaufladbaren Akkumulator gespeist wird, mit:
- Empfangsmitteln (12, 14) für Navigationssignale;
- Verarbeitungsmitteln (16, 18) für die Navigationssignale, die so beschaffen sind, dass sie eine Messung der Position, der Verlagerungsgeschwindigkeit (v) und der Zeit oder PVT-Messungen erzeugen, wobei die Verarbeitungsmittel eine Verarbeitungseinheit (18) enthalten, die so beschaffen ist, dass sie bei einer ersten so genannten normalen Betriebsfrequenz (f_{ck1}) arbeitet; und
- Taktmitteln (22) zum Erzeugen der normalen Betriebsfrequenz (f_{ck1});
**dadurch gekennzeichnet, dass** die Taktmittel (22) so beschaffen sind, dass sie die Betriebsfrequenz der Verarbeitungseinheit (18) auf mehrere so genannte reduzierte Betriebsfrequenzen (f_{ck2}, f_{ck3'} f_{ck4'} f_{ck5}), die niedriger als die normale Betriebsfrequenz (f_{ck1}) sind, in Abhängigkeit vom Wert der Messung der Verlagerungsgeschwindigkeit (v) einstellen.

7. Navigationsvorrichtung nach Anspruch 6, **dadurch gekennzeichnet, dass** ein Teilungsfaktor der Taktmittel (22) in Abhängigkeit vom Wert der Messung der Verlagerungsgeschwindigkeit (v) eingestellt wird.

8. Navigationsvorrichtung nach Anspruch 6 oder 7, **dadurch gekennzeichnet, dass** sie außerdem Mittel umfasst, die die automatische Rückstellung der Betriebsfrequenz (f_{ck}) der Verarbeitungseinheit (18) auf die normale Betriebsfrequenz (f_{ck1}) ermöglichen.

9. Navigationsvorrichtung nach Anspruch 8, **dadurch gekennzeichnet, dass** die Mittel, die die automatische Rückstellung der Betriebsfrequenz (f_{ck}) der Verarbeitungseinheit (18) ermöglichen, einen Bewegungs- oder Beschleunigungssensor umfassen.

10. Zeitmessgerät, das eine Navigationsvorrichtung nach einem der Ansprüche 6 bis 9 umfasst.
